Europäisches Patentamt

European Patent Office

Office européen des brevets

(11) Veröffentlichungsnummer: **0 028 330**
**B1**

(12) **EUROPÄISCHE PATENTSCHRIFT**

(45) Veröffentlichungstag der Patentschrift:
**11.04.84**

(21) Anmeldenummer: **80106244.9**

(22) Anmeldetag: **15.10.80**

(51) Int. Cl.³: **B 60 C 27/12**

(54) **Netz- oder kettenartige Gleitschutzvorrichtung für Fahrzeugräder.**

(30) Priorität: **06.11.79 CH 9951/79**

(43) Veröffentlichungstag der Anmeldung:
**13.05.81 Patentblatt 81/19**

(45) Bekanntmachung des Hinweises auf die Patenterteilung: **11.04.84 Patentblatt 84/15**

(84) Benannte Vertragsstaaten:
**AT BE FR GB IT LU NL SE**

(56) Entgegenhaltungen:
**DE-A- 2 526 413**
**DE-A- 2 903 236**
**US-A- 1 974 833**
**US-A- 2 012 404**
**US-A- 2 472 768**

(73) Patentinhaber: **GEBRÜDER SULZER AKTIENGE-SELLSCHAFT**
**Zürcherstrasse 9**
**CH-8401 Winterthur (CH)**

(72) Erfinder: **Bula, Karl**
**Gladiolenstrasse 2**
**CH-8472 Seuzach (CH)**
Erfinder: **Schaffner, Bruno**
**Schweizäckerstrasse 278**
**CH-8618 Oetwil am See (CH)**

(74) Vertreter: **Dipl.-Ing. H. Marsch Dipl.-Ing. K. Sparing**
**Dipl.-Phys.Dr. W.H. Röhl Patentanwälte**
**Rethelstrasse 123**
**D-4000 Düsseldorf (DE)**

Netz- oder kettenartige Gleitschutzvorrichtung für Fahrzeugräder

Die Erfindung betrifft eine netz- oder kettenartige, auf ein Fahrzeugrad montierbare Gleitschutzvorrichtung, mit einer in montiertem Zustand der Vorrichtung mindestens auf einer Radseite wirkenden Spannvorrichtung, die ein mindestens über einen Teil seiner Länge elastisch ausgebildetes Zugglied und einen in Umfangsrichtung des Rades sich erstreckenden Spanndraht mit zwei zueinander gerichteten Endabschnitten aufweist, von denen das eine freie Ende durch ein in eine Schräglage zum Spanndraht einstellbares Sperrglied geführt ist, sowie mit einem mit dem Sperrglied zusammenwirkenden Entriegelungsorgan, wobei das Sperrglied bei montierter Gleitschutzvorrichtung und bei Verriegelungsstellung des Entriegelungsorgans eine Verschiebung des Sperrgliedes relativ zum Spanndraht nur im Sinne einer Verkürzung der wirksamen Länge des Spanndrahtes zulässt und bei Entriegelungsstellung des Entriegelungsorgans durch Lageänderung des Sperrgliedes eine solche Freigabe des Spanndrahtes bewirkt, dass ein Verschieben des Sperrgliedes relativ zum Spanndraht auch in der anderen Richtung freigegeben wird.

Eine solche Gleitschutzvorrichtung ist aus der DE-B-26 08 190 bekannt. Bei dieser Gleitschutzvorrichtung ist der Spanndraht mit seinem einen Ende an einem Spannschloss festgemacht und erstreckt sich durch ein als Wendelfeder ausgebildetes Zugglied, das in Umfangsrichtung des Fahrzeugrades verläuft. Es hat sich gezeigt, dass bei der bekannten Gleitschutzvorrichtung Schwierigkeiten auftreten können, wenn sie auf das Fahrzeugrad montiert werden soll, weil dabei das Zugglied gedehnt werden muss, damit es über den grössten Radumfang geschoben werden kann. Ein solches Dehnen des Zuggliedes ist bezüglich der Spannvorrichtung nur in einer Richtung möglich, weil in der entgegengesetzten Richtung das am Spannschloss festgemachte Spanndrahtende nicht nachgeben kann. Die Richtung der möglichen Dehnung ist zwar an der Spannvorrichtung durch einen Pfeil markiert, der jedoch von einem Teil der Benutzer der Gleitschutzvorrichtung missverstanden worden ist.

Der Erfindung liegt die Aufgabe zugrunde, die Gleitschutzvorrichtung der eingangs genannten Art so zu verbessern, dass ihr Zugglied mindestens im Bereich der Spannvorrichtung in beiden Richtungen dehnbar ist.

Diese Aufgabe wird erfindungsgemäss dadurch gelöst, dass der Spanndraht an einer der Spannvorrichtung ungefähr gegenüberliegenden Stelle des Radumfanges relativ zum Zugglied fixiert ist und dass sein anderes freies Ende durch ein zusätzliches, in eine Schräglage zum Spanndraht einstellbares Sperrglied geführt ist, das mit einem weiteren ihm zugeordneten Entriegelungsorgan zusammenwirkt und das bei Verriegelungsstellung des weiteren Entriegelungsorgans — zum erstgenannten Sperrglied entgegengesetzt wirkend — eine Verschiebung des zusätzlichen Sperrgliedes relativ zum Spanndraht nur im Sinne einer Verkürzung der wirksamen Länge des Spanndrahtes zulässt und bei Entriegelungsstellung des weiteren Entriegelungsorgans durch Lageänderung des zusätzlichen Sperrgliedes eine solche Freigabe des Spanndrahtes bewirkt, dass ein Verschieben des zusätzlichen Sperrgliedes relativ zum Spanndraht auch in der anderen Richtung freigegeben wird. Durch das Fixieren des Spanndrahtes etwa in seiner Mitte entstehen in der neuen Spannvorrichtung zwei gegeneinander bewegliche Enden, so dass sich das Zugglied leichter auf den äusseren Durchmesser des Fahrzeugrades dehnen und die Gleitschutzvorrichtung über das Rad schieben lässt. Durch das Anordnen eines zusätzlichen Sperrgliedes mit zusätzlichem Entriegelungsorgan wirkt bei montierter Gleitschutzvorrichtung und Verriegelungsstellung des weiteren Entriegelungsorgans auch das zweite freie Ende des Spanndrahtes im Sinne einer Verkürzung der wirksamen Länge, so dass die Gleitschutzvorrichtung sich wiederum sicher auf dem Fahrzeugrad festspannt.

Nach einer vorteilhaften Weiterbildung der Erfindung sind beide Entriegelungsorgane einer Spannvorrichtung durch ein gemeinsames Betätigungsorgan gekuppelt. Dieses umgibt zweckmässig die beiden Entriegelungsorgane und die beiden Sperrorgane rahmenartig, so dass ein besonderer Spannschlosskörper nicht mehr vorgesehen werden muss wie bei der bekannten Vorrichtung.

Ein Ausführungsbeispiel der Erfindung ist in der folgenden Beschreibung anhand der Zeichnung näher erläutert. Es zeigen:

Figur 1 ein Automobilrad mit darauf montierter Gleitschutzvorrichtung gemäss der Erfindung,

Figur 2 eine Prinzipskizze des Spanndrahtes mit Spannvorrichtung,

Figur 3 eine Ansicht der Spannvorrichtung in grösserem Masstab als in Fig. 1,

Figur 4 einen Schnitt entsprechend der Linie IV-IV in Fig. 3, wobei das Sperrglied sowie andere Details weggelassen sind und

Figur 5 einen Schnitt durch die Fixierungsstelle des Spanndrahtes.

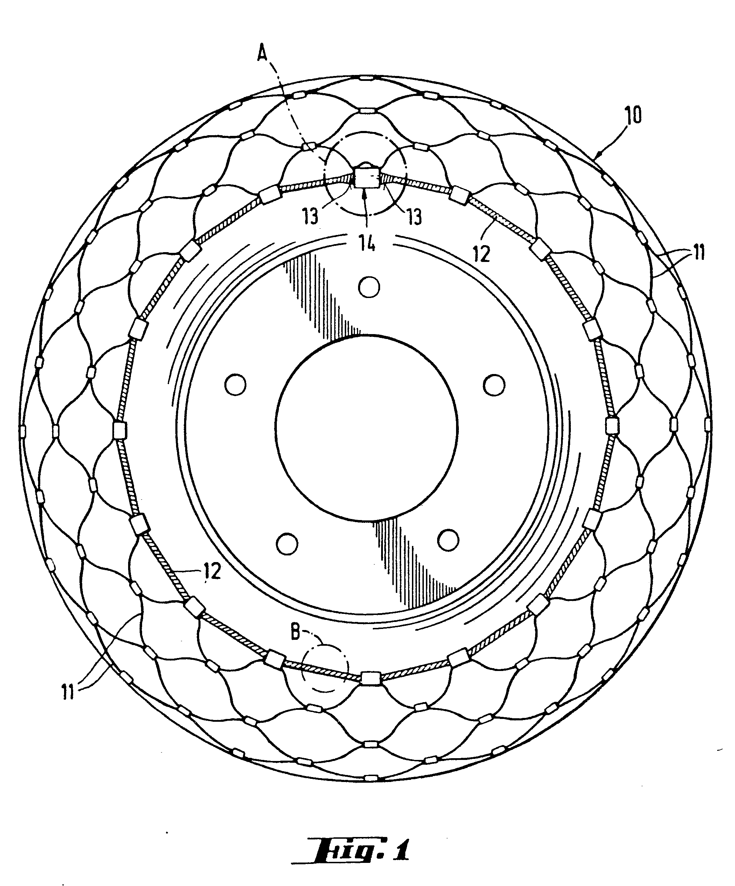

Gemäss Fig. 1 ist auf einem Rad 10 eine Gleitschutzvorrichtung 11 montiert, die auf der Radinnenseite mit der ein Zugglied 12 aufweisenden Spannvorrichtung 14 versehen ist. Auf der nicht sichtbaren Radaussenseite besitzt die Gleitschutzvorrichtung zweckmässig eine gleiche Spannvorrichtung. Unter bestimmten Umständen könnte auf der Radaussenseite auch ein unelastischer Endring der Gleitschutzvorrichtung vorhanden sein, wobei die Länge des Ringes also unveränderlich ist.

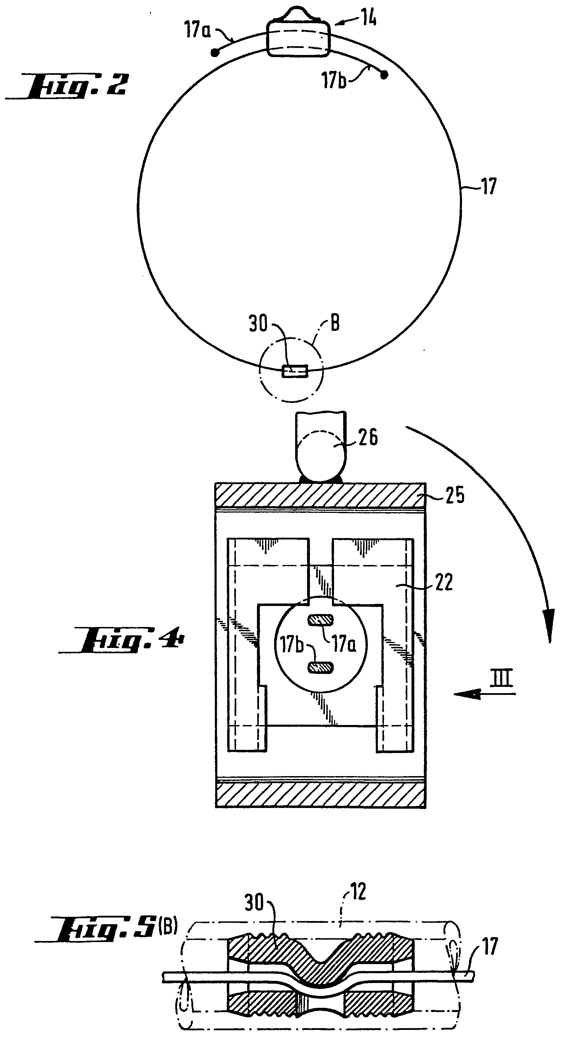

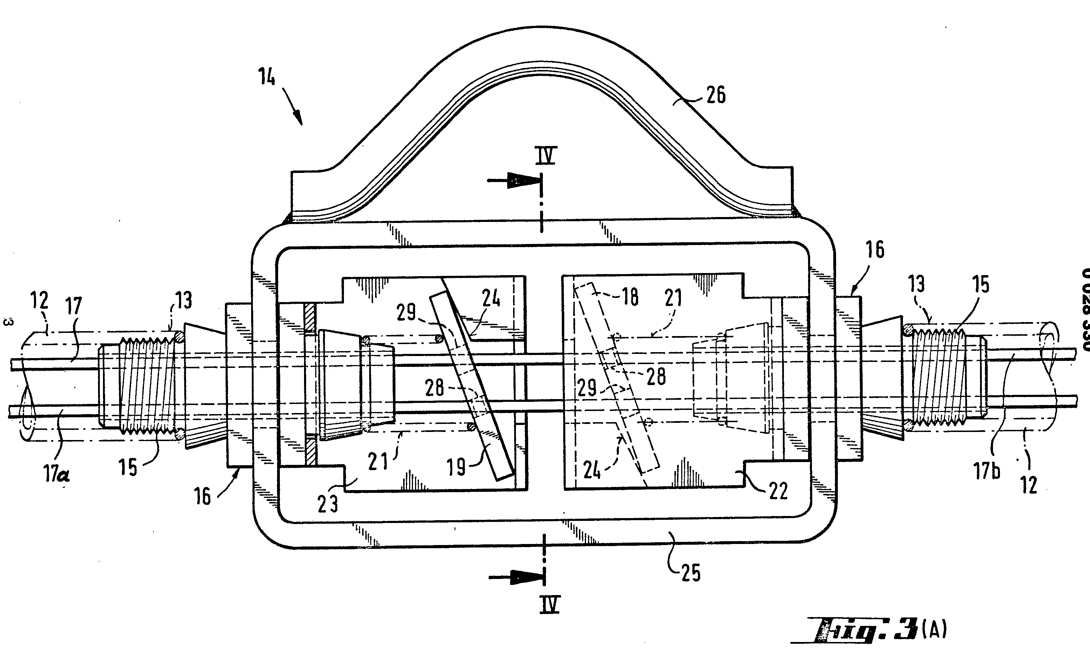

Das Zugglied 12 besteht aus einer Schraubenfeder, die mit ihren beiden Enden 13 auf je einem Gewindeansatz 15 zweier büchsenartiger Körper 16 aufgeschraubt ist (Fig. 3). Durch das Innere der Schraubenfeder 12 erstreckt sich ein Spanndraht 17 von etwa rechteckigem Querschnitt, der ungefähr in seiner Mitte, der Spannvorrichtung gegenüberliegend, relativ zum Zugglied 12 fixiert ist (Fig. 2 und 5).

Von der Fixierungsstelle B aus sind die beiden freien Enden 17a und 15b des Spanndrahtes 17 durch die beiden büchsenartigen Körper 16 und zwei Sperrglieder 18 und 19 geführt. Die beiden Sperrglieder sind als viereckige Scheiben ausgebildet, die je ein Loch und 29 aufweisen. Die Löcher 28 sind so ausgebildet und bemessen, dass das hindurchgeführte Drahtende in der in Fig. 3 gezeichneten Schräglage durch Klemmwirkung festgehalten wird, wenn es sich entgegen dem Sinne einer Verkürzung der wirksamen Länge des Spanndrahtes bewegen will. Die Löcher 29 sind demgegenüber grösser dimensioniert und dienen lediglich als Führung für das betreffende Drahtende ; sie üben also keine Klemmwirkung aus. An den Sperrgliedern 18 und 19 stützt sich je eine Druckfeder 21 ab, die mit ihrem anderen Ende auf einem konischen Abschnitt des benachbarten büchsenförmigen Körpers 16 ruht. Die Sperrglieder 18 und 19 sind je in einem Entriegelungsorgan 22 bzw. 23 angeordnet, in dem sie sich mit ihrer der Druckfeder 21 abgewendeten Seite auf einer Keilfläche 24 abstützen. In der in Fig. 3 gezeichneten Stellung sind die bieden Entriegelungsorgane 22 und 23 in Verriegelungsstellung für die beiden Sperrglieder 18 und 19, d. h. die Drahtenden 17a und 17b können sich nur im Sinne einer Verkürzung der wirksamen Länge des Spanndrahtes 17 bewegen.

Die büchsenartigen Körper 16 sind in einem Viereckrahmen 25 drehbar gelagert, der die Entriegelungsorgane 22 und 23 umgibt. Die aus Federblech gebogenen Entriegelungsorgane 22 und 23 sind ihrerseits ebenfalls drehbar auf den büchsenartigen Körpern 16 gelagert. Der Viereckrahmen 25 ist auf seiner in Fig. 3 oberen Längsseite aussen mit einem Drahtbügel 26 versehen, mittels dem er um etwa 90° um die Spanndrahtenden 17a und 17b verschwenkt werden kann, wobei die beiden Entriegelungsorgane 22 und 23 gemeinsam mitgenommen werden. Bei einer solchen Schwenkbewegung gelangen dann die Keilflächen 24 in eine Stellung, die relativ nahe den Klemmlöchern 28 liegt. In dieser Stellung haben die Entriegelungsorgane 22 und 23 ihre Entriegelungsstellung ihne, was bedeutet, dass die Drahtenden sich auch im Sinne einer Verlängerung bewegen können, denn in dieser Stellung sind die Sperrglieder 18 und 19 wirkungslos.

Das Fixieren des Spanndrahtes 17 in der Schraubenfeder 12 geschieht gemäss Fig. 5 mittels einer kurzen Blechhülse 30, die mittels eines stempelartigen Werkzeuges so verformt wird, dass der Draht 17 in der Hülse 30 unverrückbar festgehalten ist. Die Blechhülse 30 weist auf ihrer Aussenseite ein schwaches, gewindeartiges Profil auf, in das die Windungen der Schraubenfeder 12 zu liegen kommen, wenn der Draht 17 mit der auf ihm befindlichen Hülse 30 in die Schraubenfeder 12 eingezogen worden ist.

Der Drahtbügel 26 am Viereckrahmen 25 hat zugleich den Vorteil, dass er dem Benutzer der Gleitschutzvorrichtung anzeigt, ob diese betriebsfähig montiert ist oder nicht. Bei der in Fig. 1 gezeichneten Stellung des Bügels 26, d. h. dieser erstreckt sich parallel zur Fahrzeugradebene, ist die Gleitschutzvorrichtung betriebsfähig montiert, weil die Entriegelungsorgane 22 und 23 sich in Verriegelungsstellung befinden und damit die Sperrglieder 18 und 19 wirksam sind. Beim Verschwenken des Viereckrahmens 25 um 90° im Uhrzeigersinn (Fig. 4), kommt der Drahtbügel 26 in eine vom Fahrzeugrad abstehende Lage, so dass der Benutzer weiss, dass die Entriegelungsorgane in Entriegelungsstellung sind und die auf das Fahrzeugrad aufgezogene Gleitschutzvorrichtung noch nicht betriebsfähig ist, weil die Sperrglieder noch in ihrer unwirksamen Stellung sind.

**Ansprüche**

1. Netz- oder kettenartige, auf ein Fahrzeugrad (10) montierbare Gleitschutzvorrichtung (11), mit einer in montiertem Zustand der Vorrichtung (11) mindestens auf einer Radseite wirkenden Spannvorrichtung (14), die ein mindestens über einen Teil seiner Länge elastisch ausgebildetes Zugglied (12) und einen in Umfangsrichtung des Rades (10) sich erstreckenden Spanndraht (17) mit zwei zueinander gerichteten Endabschnitten aufweist, von denen das eine freie Ende (17a) durch ein in eine Schräglage zum Spanndraht (17) einstellbares Sperrglied (19) geführt ist, sowie mit einem mit dem Sperrglied (19) zusammenwirkenden Entriegelungsorgan (23), wobei das Sperrglied (19) bei montierter Gleitschutzvorrichtung (11) und bei Verriegelungsstellung des Entriegelungsorgans (23) eine Verschiebung des Sperrgliedes (19) relativ zum Spanndraht (17) nur im Sinne einer Verkürzung der wirksamen Länge des Spanndrahtes zulässt und bei Entriegelungsstellung des Entriegelungsorgans (23) durch Lageänderung des Sperrgliedes (19) eine solche Freigabe des Spanndrahtes (17) bewirkt, dass ein Verschieben des Sperrgliedes (19) relativ zum Spanndraht (17) auch in der anderen Richtung freigegeben wird, dadurch gekennzeichnet, dass der Spanndraht (17) an einer der Spannvorrichtung (14) ungefähr gegenüberliegenden Stelle des Radumfanges relativ zum Zugglied (12) fixiert ist und dass sein anderes freies Ende (17b) durch ein zusätzliches, in eine Schräglage zum Spanndraht (17) einstellbares Sperrglied (18) geführt ist, das mit einem weiteren ihm zugeordneten Entriegelungsorgan (22) zusammenwirkt und das bei Verriegelungsstellung des weiteren Entriegelungsorgans (22) — zum erstgenannten Sperrglied (19) entgegengesetzt wirkend — eine Verschiebung des zusätzlichen Sperrgliedes (18) relativ zum Spanndraht (17) nur im Sinne einer Verkürzung der wirksamen Länge des Spanndrahtes (17) zulässt und bei Entriegelungsstellung des weiteren Entriegelungsorgans (22) durch Lageänderung des zusätzlichen Sperrgliedes (18) eine solche Freigabe des Spanndrahtes (17) bewirkt, dass ein Verschieben des zusätzlichen Sperrgliedes (18) relativ zum Spanndraht (17) auch in der anderen Richtung freigegeben wird.

2. Vorrichtung nach Anspruch 1, dadurch gekennzeichnet, dass beide Entriegelungsorgane (22, 23) durch ein gemeinsames Betätigungsorgan (25, 26) gekuppelt sind.

### Claims

1. A net-like or chain-like anti-slip device (11) fittable to a vehicle wheel (10) and having a clamping device (14) which, with the anti-slip device (11) assembled, is operative at least on one side of the wheel and has a resilient pull member (12) extending over at least some of wheel length and a clamping wire (17) extending peripherally of the wheel (10), the wire having two terminal parts which are directed towards one another, one free (17a) end extending through a locking member (19) adjustable into an inclined position relatively to the clamping wire (17), the device also having a release member (23) co-operating with the locking member (19), the same permitting, with the anti-slip device (11) assembled and with the release member (23) in the locking position, movement of the locking member (19) relatively to the clamping wire (17) only in the sense of a shortening of the effective length of such wire, and with the release member (23) in the release position by altering the position of the locking member (19) so releasing the clamping wire (17) that the locking member (19) is released for movement relatively to the clamping wire (17) in the other direction, charakterised in that the clamping wire (17) is secured relatively to the pull member (12) to a position on the wheel periphery substantially opposite the clamping device (14), and the other and free end (176) of the clamping wire (17) is guided by another locking member (18) which is adjustable into an inclined position relatively to the clamping wire (17), co-operates with another release member (22) associated with it, with the same in the release position — working oppositely to the locking member (19) — permits a movement of the another locking member (18) relatively to the clamping wire (17) only in the sense of a shortening of the length thereof, and with the another release member (22) in the release position, by altering the position of the another locking member (18) so to release the clamping wire (17), that the another locking member (18) is released for movement relatively to the clamping wire (17) in the other direction.

2. A device according to claim 1, characterised in that the two release members (22, 23) are coupled together by a common actuating element (25, 26).

### Revendications

1. Dispositif antidérapant (11) en forme de filet ou de chaîne pouvant être monté sur une roue de véhicule (10) présentant, à l'état monté de ce dispositif (11), un dispositif de tension (14) agissant sur au moins une face de la roue, dispositif de tension qui comporte un organe tendu (12) réalisé élastiquement sur au moins une partie de sa longueur et un fil tendeur (17), s'étendant dans le sens périphérique de la roue (10), muni de deux parties d'extrémité orientées l'une vers l'autre dont une extrémité libre (17a) est guidée par un élément d'arrêt (19) réglable dans une position oblique par rapport au fil tendeur (17), ainsi qu'un organe de déverrouillage (23) coopérant avec l'élément d'arrêt (19), l'élément d'arrêt (19) ne permettant alors, lorsque le dispositif antidérapant (11) est monté et lorsque l'organe de déverrouillage (23) est en position de verrouillage, un coulissement de l'élément d'arrêt (19) par rapport au fil tendeur (17) que dans le sens d'un raccourcissement de la longueur efficace du fil tendeur (17) et, lorsque l'organe de déverrouillage est en position de déverrouillage assurant une libération du fil tendeur (17) par un changement de position de l'élément d'arrêt (19) tel qu'un coulissement de l'élément d'arrêt (19) par rapport au fil tendeur (17), est aussi possible dans l'autre sens, caractérisé en ce que le fil tendeur (17) est fixé à un point de la périphérie de la roue situé à peu près à l'opposé du dispositif de tension (14) par rapport à l'organe tendu (12), et en ce que son autre extrémité libre (17b) est guidée par un élément d'arrêt (18) supplémentaire, réglable dans une position oblique par rapport au fil tendeur (17), élément d'arrêt (18) qui coopère avec un autre organe de déverrouillage (22) qui lui est associé et qui, dans la position de verrouillage de l'autre organe de déverrouillage (22) — présentant un effet inverse à celui de l'élément d'arrêt (19) cité en premier — ne permet un coulissement de l'élément d'arrêt (18) supplémentaire par rapport au fil tendeur (17) que dans le sens d'un raccourcissement de la longueur efficace du fil tendeur (17) et, dans la position de déverrouillage de l'autre organe de déverrouillage (22), assure une libération du fil tendeur (17) par un changement de position de l'élément d'arrêt tel qu'un coulissement de l'élément d'arrêt (18) supplémentaire par rapport au fil tendeur (17) est aussi possible dans l'autre sens.

2. Dispositif selon la revendication 1, caractérisé en ce que les organes de déverrouillage (22, 23) sont accouplés par un organe de manoeuvre (25, 26) commun.

**Fig. 1**

Fig. 2

17a

14

17b

17

30

B

26

Fig. 4

25

22

17b  17a

III

Fig. 5 (B)

30

12

17

*Fig. 3* (A)